# EUROPÄISCHE PATENTANMELDUNG

(11) **EP 3 964 398 A1**
(43) Veröffentlichungstag der Anmeldung: **09.03.2022**
(21) Anmeldenummer: 21195286.6
(22) Anmeldetag: 07.09.2021
(51) Int. Cl.: B60R 9/045

(54) **STAUBOX**

(30) Priorität: 08.09.2020 DE 202020003812 U; 04.03.2021 DE 102021105306
(71) Anmelder: Metz, Josel, 87466 Oy-Mittelberg (DE)
(72) Erfinder: Metz, Josel, 87466 Oy-Mittelberg (DE)
(74) Vertreter: Patentanwaltzkanzlei Hutzelmann

(57) **Zusammenfassung**

Staubox (1) mit einem Stauraum (2), einem Deckel (3) und mindestens einem Fach, wobei der Stauraum (2) rund ausbildet ist, einen Boden (9) aufweist und der Deckel (3) gegenüber des Bodens (9) angeordnet ist.

## Beschreibung

Die Erfindung bezieht sich auf eine Staubox mit einem Stauraum, einem Deckel und mindestens einem Fach.

Gerade bei Traktoren und Baumaschinen muss einiges an Zubehör und Ausrüstung mitgeführt werden. Stauraum ist in der Regel in der Fahrzeugkabine jedoch nicht vorhanden.

Vor allem müssen oftmals durch die StVZO vorgeschriebene Sicherheitseinrichtungen wie Wandreieck, Verbandskasten, Spanngurte mitgeführt werden.

Durch den fehlenden Stauraum ist dies jedoch nicht oder nur schwer realisierbar, so daß ständig ein Bußgeld droht.

Aufgabe der Erfindung ist es, eine Staubox zu schaffen, die gerade bei den oben genannten Fahrzeugen, nämlich Baumaschinen und Traktoren, ohne daß die Arbeiten mit den Fahrzeugen behindert werden, befestigbar ist und so zusätzlicher Stauraum geschaffen wird.

Diese Aufgabe wird erfindungsgemäß dadurch gelöst, daß der Stauraum rund ausbildet ist, einen Boden aufweist und der Deckel gegenüber des Bodens angeordnet ist.

Hierdurch wird Stauraum geschaffen.

Dabei hat es sich als sehr vorteilhaft erwiesen, wenn am Boden des Stauraumes eine Lagerung zur Befestigung der Staubox vorgesehen ist.

Mit dieser Lagerung lässt sich die Staubox am Fahrzeug befestigen.

Sehr vorteilhaft ist es dabei, wenn die Lagerung als Drehlager ausgebildet ist.

Hierdurch lassen sich Lageänderungen ausgleichen. Die Staubox ist trotzdem immer gut zugänglich.

Gemäß einer sehr vorteilhaften Weiterbildung der Erfindung ist es auch denkbar, daß der Deckel in den Stauraum eingehängt ist oder mittels einer anderweitigen Befestigung befestigt ist.

Damit kann die Staubox verschlossen und bei Bedarf geöffnet werden.

Äußerst vorteilhaft ist es in diesem Zusammenhang, wenn der Deckel einen Verschluß aufweist, der als Bolzen mit Splint, Schraubverschluß, Rastverschluß oder dergleichen ausgebildet sein kann.

Damit kann der Deckel arretiert werden, so daß sich dieser nicht ungewollt öffnet. Durch den Verzicht auf Scharniere wird verhindert, daß der Deckel beispielsweise herabhängt und dann unkontrolliert Schäden verursacht, wenn dieser im geöffneten Zustand vergessen wird.

Weiterhin hat es sich als besonders vorteilhaft erwiesen, wenn im Deckel ein Griff vorgesehen ist, der versenkt ausgebildet sein kann.

Mit Hilfe eines Griffes kann der Deckel leicht ergriffen und geöffnet werden. Ein versenkt angeordneter Griff, der beispielsweise aus einer Griffmulde bestehen oder ausklappbar ausgebildet sein kann, sorgt dafür, daß sich nichts am Griff verhängen kann. Beschädigungen werden vermieden.

Eine weitere sehr vorteilhafte Fortbildung der Erfindung liegt vor, wenn die Staubox eine asymmetrische Gewichtsverteilung aufweist.

Durch die asymmetrische Gewichtsverteilung wird die Staubox in einer vorgegebenen Position gehalten.

Sehr vorteilhaft ist es dabei, wenn ein Gewicht an einer Stelle der Staubox vorgesehen ist.

Das Gewicht pendelt sich entsprechend der Schwerkraft unten ein. Damit ist die Ausrichtung der Staubox bestimmt.

Äußerst vorteilhaft ist es erfindungsgemäß auch, wenn mehrere Fächer innerhalb des Stauraumes vorgesehen sind.

Durch mehrere Fächer kann leichter Ordnung gehalten werden.

Dabei hat es sich als sehr vorteilhaft erwiesen, wenn die Fächer getrennt zugänglich ausgebildet sind.

Hierdurch wird ein individueller Zugriff auf jedes einzelne Fach ermöglicht.

Äußerst vorteilhaft ist es auch, wenn jedes Fach des Stauraumes mit einem Rand oder dergleichen ausgebildet ist.

Durch den Rand, eine Stange oder eine andere Barriere wird verhindert, daß bei geöffnetem Deckel in der Staubox befindliche Gegenstände herausfallen.

Eine erfindungsgemäß äußerst vorteilhafte Verwendung der Staubox liegt vor, wenn die Staubox im Inneren einer Felge eines Rades angeordnet wird.

Gerade bei Tiefbettfelgen ist innerhalb des durch die Felge definierten Raumes ausreichend Platz für die Staubox.

Dabei hat es sich als sehr vorteilhaft erwiesen, wenn die Staubox im Inneren einer Felge eines Traktors oder einer Baumaschine angeordnet wird.

Besonders bei Traktoren und bei Baumaschinen werden große Felgen genutzt, die besonders viel Platz bieten. Zudem fahren diese Maschinen nicht sehr schnell, so daß auch bei geringem Gewicht der Staubox sichergestellt wird, daß diese sich nicht mit der Felge mitdreht, sondern die Drehung der Felge bzw. des Rades durch das Drehlager ausgeglichen wird.

Weiterhin ist es sehr vorteilhaft, wenn die Staubox mit einer Aufnahme zur Befestigung in der Felge ausgerüstet wird.

Durch diese Befestigung kann die Staubox beispielsweise an den Radbolzen befestigt werden. Es ist aber auch denkbar, daß die Befestigung in Öffnungen der Felge eingreift.

Desweiteren ist es sehr vorteilhaft, wenn der Deckel der Staubox als Werbefläche verwendet wird.

Der Deckel ist eine gut von außen wahrnehmbare Fläche. Diese ist zur Verwendung als Werbefläche besonders gut geeignet.

Im folgenden wird die Erfindung anhand eines Ausführungsbeispiels veranschaulicht.

Dabei zeigen:
- Fig. 1: ein Schaubild einer erfindungsgemäßen Vorrichtung,
- Fig. 2: ein Schaubild der Rückseite derselben Vorrichtung,

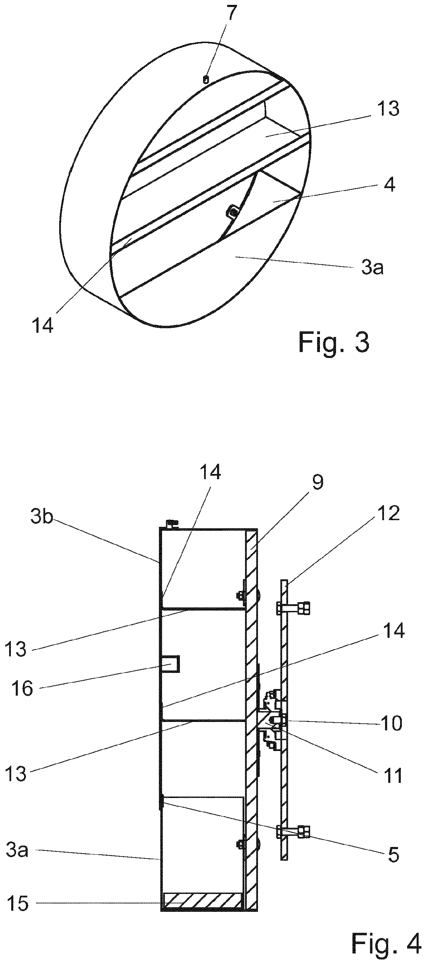

- Fig. 3: ein Schaubild der geöffneten Vorrichtung,
- Fig. 4: einen Schnitt durch die Vorrichtung,

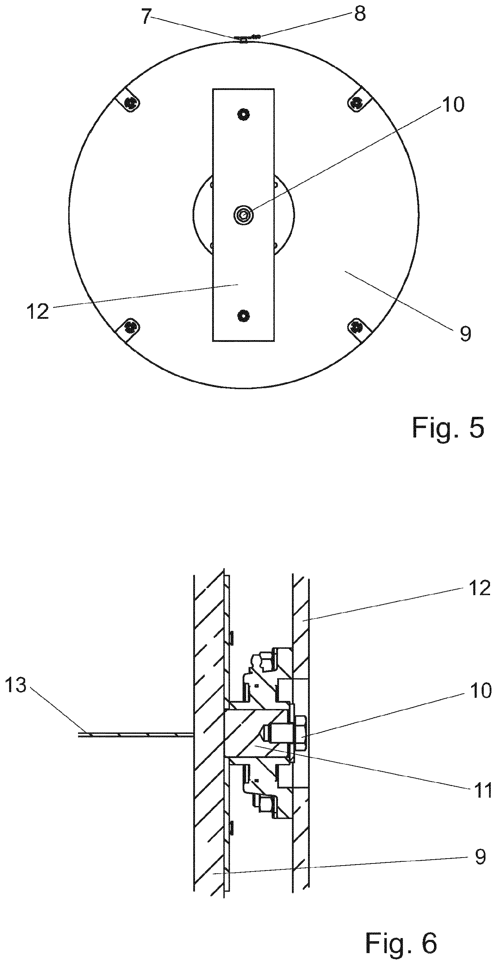

- Fig. 5: eine Ansicht der Vorrichtung, und
- Fig. 6: einen Schnitt durch das Drehlager der Befestigung der Vorrichtung.

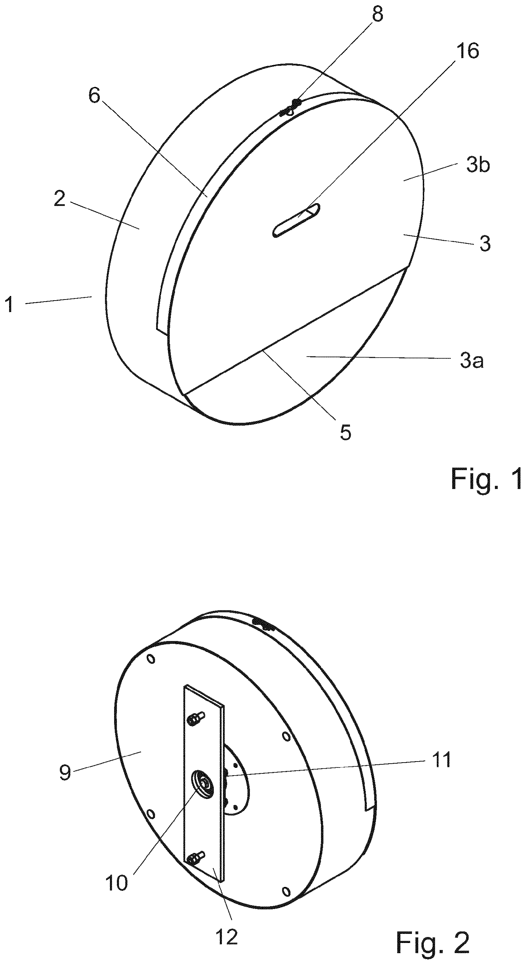

Mit 1 ist in Fig. 1 eine Staubox mit einem Unterteil 2 und einem Deckel 3 bezeichnet. Das Unterteil 2 ist Zylinderförmig mit rundem Querschnitt ausgebildet. An einer Stirnseite des Zylinders ist der Deckel 3 angeordnet.

Der Deckel 3 besteht in diesem Ausführungsbeispiel aus zwei Teilen 3a und 3b. Der Teil 3a ist fest auf dem Unterteil 2 befestigt und bildet so ein zur Stirnseite des Unterteils hin teilweise geschlossenes Fach 4. Das Deckelteil 3b dagegen ist herausnehmbar ausgebildet und greift mit einem Ansatz 5 hinter den Deckelteil 3a. Gegenüberliegend ist ein Rand 6 vorgesehen, welcher sich an die Außenkontur des Unterteils 2 anlegt und über einen Bolzen 7 geschoben ist.

Ist der Deckelteil 3b so aufgesetzt, ist dieser befestigt und kann nicht herunterfallen. Zusätzlich ist in diesem Ausführungsbeispiel ein Splint 8 vorgesehen, welcher Quer in den Bolzen 7 eingesetzt ist und so ein versehentliches Lösen des Deckelteils 3b verhindert. Anstatt oder zusätzlich zum Splint 8 kann ein nicht dargestelltes Schloß, vorzugsweise ein Vorhängeschloß, vorgesehen sein, welches ein unbefugtes Öffnen verhindert.

Die dem Deckel 3 gegenüberliegende Stirnseite des Unterteils 2 ist mit einem Boden 9 verschlossen.

Am Boden 9 ist zentrisch eine Lagerung 10 vorgesehen, welche aus einem Drehlager 11, welches beispielsweise als Kugel- oder Rollenlager ausgebildet sein kann, und einer Befestigung 12 besteht, welche auf der vom Boden 9 abgewandten Seite des Drehlagers 11 angebracht ist. Andere Drehlager 11 sind denkbar. So können beispielsweise auch Gleitlager vorgesehen werden.

Die Befestigung 12 ist so ausgebildet, daß diese auf einer Unterlage oder in einer Felge befestigt werden kann.

Innerhalb des Unterteils 2 sind Gefachböden 13 vorgesehen. Diese können an ihrer Vorderseite, die dem Deckel 3 zugewandt ist, mit einer Aufkantung 14 versehen sein, welche verhindert, daß Staugut beim Öffnen des Deckels 3 herausfällt.

Im Gefache 4 ist ein zusätzliches Gewicht 15 vorgesehen, welches dafür sorgt, daß der Schwerpunkt der Staubox 1 sich dort befindet.

Anstatt des Gewichtes 15 kann auch eine entsprechende Verteilung des Staugutes vorgesehen sein.

Wird nun die Staubox 1 in der Vertiefung einer Felge eines Traktors oder einer Baumaschine befestigt, ist der Zylinder der Staubox liegend angeordnet. Das Fach 4 befindet sich unten.

Beim Fahren bleibt die Staubox in ihrer so ausgerichteten Position stehen. Die Drehbewegung wird durch das Drehlager 11 ausgeglichen.

Auf diese Art und Weise ist wertvoller Stauraum für alle möglichen, mitzuführenden Gegenstände geschaffen. So können problemlos Ketten, Zugösen, aber auch Sicherheitseinrichtungen wie Warndreieck und Verbandskasten, aber auch Warnlampen oder dergleichen mitgeführt werden.

Zur leichteren Handhabbarkeit des Deckelteils 3b kann dieser eine Griffmulde 16 aufweisen. Es ist dabei denkbar, daß innerhalb der Griffmulde auch ein herausklappbarer Griff vorgesehen ist.

Der Deckel 3 ist im wesentlichen eben ausgeführt. Die sich so ergebende Fläche kann mit Werbung versehen werden.

Die Abmessungen der Staubox sind an den jeweiligen Einbauort, beispielsweise die Felgengröße und die Abmessung des Tiefbetts angepasst.

Anstatt des Bolzenverschlusses 7 mit dem beschriebenen Splint 8 ist es auch denkbar, daß ein Rastverschluß oder ein Schraubverschluß vorgesehen ist. Ebenso ist ein Schloß denkbar. Kombinationen sind denkbar.

## Patentansprüche

1. Staubox (1) mit einem Stauraum (2), einem Deckel (3) und mindestens einem Fach, **dadurch gekennzeichnet, daß** der Stauraum (2) rund ausbildet ist, einen Boden (9) aufweist und der Deckel (3) gegenüber des Bodens (9) angeordnet ist.

2. Staubox nach Anspruch 1, **dadurch gekennzeichnet, daß** am Boden (9) des Stauraumes (2) eine Lagerung (10) zur Befestigung der Staubox (1) vorgesehen ist.

3. Staubox nach Anspruch 2, **dadurch gekennzeichnet, daß** die Lagerung (10) als Drehlager (11) ausgebildet ist.

4. Staubox nach Anspruch 1, 2 oder 3, **dadurch gekennzeichnet, daß** der Deckel (3) in den Stauraum (2) eingehängt ist oder mittels einer anderweitigen Befestigung befestigt ist.

5. Staubox nach einem der vorangehenden Ansprüche, **dadurch gekennzeichnet, daß** der Deckel (3) einen Verschluß aufweist, der als Bolzen (7) mit Splint (8), Schraubverschluß, Rastverschluß oder dergleichen ausgebildet sein kann.

6. Staubox nach einem der vorangehenden Ansprüche, **dadurch gekennzeichnet, daß** im Deckel (3) ein Griff (16) vorgesehen ist, der versenkt ausgebildet sein kann.

7. Staubox nach einem der vorangehenden Ansprüche, **dadurch gekennzeichnet, daß** die Staubox (1) eine asymmetrische Gewichtsverteilung aufweist.

8. Staubox nach Anspruch 7, **dadurch gekennzeichnet, daß** ein Gewicht (15) an einer Stelle der Staubox (1) vorgesehen ist.

9. Staubox nach einem der vorangehenden Ansprüche, **dadurch gekennzeichnet, daß** mehrere Fächer innerhalb des Stauraumes (2) vorgesehen sind.

10. Staubox nach Anspruch 9, **dadurch gekennzeichnet, daß** die Fächer getrennt zugänglich ausgebildet sind.

11. Staubox nach einem der vorangehenden Ansprüche, **dadurch gekennzeichnet, daß** jedes Fach (13) des Stauraumes mit einem Rand (14) oder dergleichen ausgebildet ist.

12. Verwendung einer Staubox nach einem der vorangehenden Ansprüche, **dadurch gekennzeichnet, daß** die Staubox (1) im Inneren einer Felge eines Rades angeordnet wird.

13. Verwendung nach Anspruch 12, **dadurch gekennzeichnet, daß** die Staubox (1) im Inneren einer Felge eines Traktors oder einer Baumaschine angeordnet wird.

14. Verwendung nach Anspruch 12 oder 13, **dadurch gekennzeichnet, daß** die Staubox (1) mit einer Aufnahme (12) zur Befestigung in der Felge ausgerüstet wird.

15. Verwendung nach Anspruch 12, 13 oder 14, **dadurch gekennzeichnet, daß** der Deckel (3) der Staubox (1) als Werbefläche verwendet wird.
